Europäisches Patentamt

European Patent Office

Office européen des brevets

(11) Publication number: **0 263 080**
**A2**

# (12) EUROPEAN PATENT APPLICATION

(21) Application number: **87830332.0**

(22) Date of filing: **16.09.87**

(51) Int. Cl.⁴: **G 01 N 23/04**
**G 01 N 23/18**

(30) Priority: **01.10.86 IT 4850886**

(43) Date of publication of application:
**06.04.88 Bulletin 88/14**

(84) Designated Contracting States: **BE DE FR GB**

(71) Applicant: **Comitato Nazionale per la Ricerca e per lo Sviluppo dell'Energia Nucleare e delle Energie Alternative**
**Viale Regina Margherita 125**
**I-00198 Roma (IT)**

(72) Inventor: **Ferriani, Stefano**
**Via Tommaso Rossi 51**
**I-40014 Crevalcore BO (IT)**

**Cappabianca, Claudio**
**Via Braccianese 58**
**I-00062 Bracciano RM (IT)**

**Della Rocca, Antonio Bruno**
**Via Vittorio Ascoli 4**
**I-00123 Roma RM (IT)**

(74) Representative: **Tonon, Gilberto et al**
**c/o Società Italiana Brevetti Piazza Poli 42**
**I-00187 Roma (IT)**

(54) A method and apparatus for the automatic radiograpgicreal-time analysis of articles, in particular for pipe-plug weldings.

(57) A method and apparatus is disclosed allowing a real-time analysis on specimens having any composition and geometry. The specimen in placed in front of a radiographic camera with a computer controlled positioning; the radiographic image is enlarged, converted into a visible image and subsequently projected onto a pick-up plane in real time, where a television camera converts the light energy contained in the beam coming from the image into an electric signal. Said signal is then digitized and it is consequently suitable to be memorized and displayed and to be subjected to all processing operations for the detection of possible defects.

FIG. 1

EP 0 263 080 A2

**Description**

## "A METHOD AND APPARATUS FOR THE AUTOMATIC RADIOGRAPHIC REAL-TIME ANALYSIS OF ARTICLES, IN PARTICULAR FOR PIPE-PLUG WELDINGS"

The present invention refers to a method and apparatus for performing real-time radiographic analysis of articles, and it is particularly aimed at the analysis of pipe-plug weldings.

The production of fuel elements for fast nuclear reactors has encountered a number of problems, first of all the non destructive examination of the pipe-plug weldings of the cladding elements. The construction specifications have imposed the detection of defects having a diameter of 60 ÷ 80 microns, and it is necessary to perform daily about 300 ÷ 400 examinations of different cladding elements; it is therefore necessary to examine each day from 600 to 800 weldings.

The radiographic examination performed according to the conventional criteria is basically limited by three kinds of inconvenience:

- there are actual resolution limits when X-ray tubes are used, whose focal spots produce penumbra areas that greatly reduce the definition of the radiography and consequently do not correspond to the above mentioned detection criteria;

- there are moreover physiological limitations on the operator who has to analyze the radiographies; these limits together with the fatigue of the operator and the subjectiveness of the same have a negative influence on the actual reliability of the examination;

- the time required by the examination renders practically impossible the adoption of this examination in a mass production process.

In order to partially overcome these inconveniences, systems have been developed based on radioscopy, but this technique has had a limited success in the industry because of the low resolution determined by the coarse-grain structure of the screens for converting X-rays into visible light, said characteristic being further worsened by the conventional television cameras. Moreover the lack of image processing software, which needs to be particularly sophisticated in this field, has limited the use of said technique to components of great thickness.

At present, even if the above physiological limits have been partially overcome, there is a lack of apparatus capable of exploiting the present advantages of the technique on an actual mass production comparable with that required for analyzing nuclear fuel elements.

An aim of the present invention is consequently to provide a device and a method that may operate automati cally for analyzing radiographically in real time articles of manufacture permitting the application of this technique to industrial mass production. Another aim of this invention is to provide an apparatus that can meet the strict requirements required for the analysis of pipe-plug weldings relating to nuclear fuel elements.

Consequently, the object of the present invention is an apparatus for radiographic analysis comprising:

- a micro-focus radiographic device capable of emitting X-rays;

- a brilliance intensifier device placed in front of said radiographic device to convert the X-rays of the latter into luminous energy;

- pick-up means placed in front of said brilliance intensifier device on the opposite side with respect to said radiographic device, to convert the light energy from said brilliance intensifier device into electric signals;

- conversion means, connected to said pick-up means, to convert said electrical signals into digital signals;

- processor means, connected to said pick-up means, controlling the data conversion by said conversion means;

- memory means, connected to said processor means, for memorizing said data;

- display means connected to said processor means for displaying said data;

- positioning means, supporting the object to be radiographed, for positioning said object between said brilliance intensifier device and said microfocus radiographic device; said processor means controlling, on the basis of the data received from said pick-up means through said conversion means, said positioning means in order to obtain an optimal focusing.

Another object of the present invention is a method, characterized by the steps of:

- positioning the object to be subjected to radiographic analysis on a positioner carriage in front of an X-ray source, obtaining the X-ray image of the article; converting said X-ray image into a luminous image; deriving from said luminous image analog signals representative of this latter; encoding in a digital form said analog signals; performing a pre-processing to eliminate defects connected to the analog-to-digital conversion; performing the analysis of the digital image according to criteria predetermined on the basis of the object.

Brief description of the drawings

Figure 1 is a block diagram showing the device according to the present invention;

figure 2 is a block diagram showing with more details the arrangement consisting of: microfocus X-ray device/ brilliance intensifier camera;

figure 3 shows the waveform produced by a bar without defects, when analyzed with the device according to the present invention;

figure 4 shows the same waveform produced by a bar of the kind shown in figure 3 which has a defect; and

figure 5 shows a particular image analysis method efficient for analyzing this kind of article.

## Disclosure of the preferred embodiment

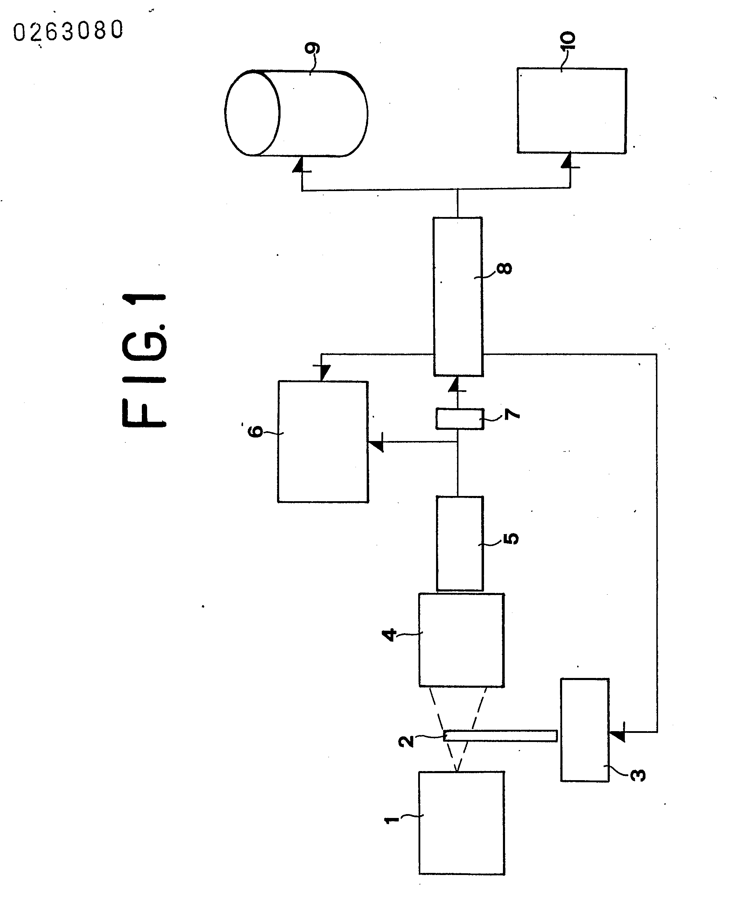

Figure 1 shows a general block diagram of the apparatus according to the present invention.

The object 2 to be radiographed is placed on the positioner device 3 which is realized with a moveable bed allowing three kinds of translation: vertical, horizontal and with rotation of the specimen support, with several speeds. This specimen support is actually realized with a chuck. The positioning device is controlled by the processor 8 in a manner better illustrated hereinafter and maintains the article between the microfocus radiographic apparatus 1 and the brilliance intensifier 4.

The microfocus radiographic apparatus 1 is realized with a ray generating tube connected to a vacuum pump system arranged to produce a vacuum within said ray generating tube.

The operation of said system is known, but it is here mentioned as a reference.

In the interior of said ray generating tube there is a filament which emits electrons, the latter being accelerated by an electrical field produced in the interior of the tube itself by means of a high voltage transformer; in the travel from the cathode towards the anode the electrons are collimated by means of electromagnetic lenses housed within the tube itself and finally this beam of collimated electrons impinges on the anode thus causing the emission of X-rays (the so called bremsstrahlung effect).

Said X-rays travel towards the brilliance intensifier 4, which converts X-rays into a luminous image; said luminous image being translated into electric signals by the television camera 5 and sent at the same time to the processor 8 and to the monitor 6 for display; between the camera 5 and the processor 8 an analog-to-digital conversion module is located. The processor 8 also provides for the control of the positioning device 3 according to the data in input from the television camera 5 to obtain the optimal focusing of the specimen 2 and to allow if necessary several different views of the specimen 2 under different view angles. Since all the data are encoded in digital form, said data are well suited for an analysis by means of dedicated programs for image processing and possibly for the memori zation on the disk 9 for a subsequent processing. The data, besides being displayed on the monitor 6, may also be printed by a printer/plotter 10 cocnnected to the processor 8.

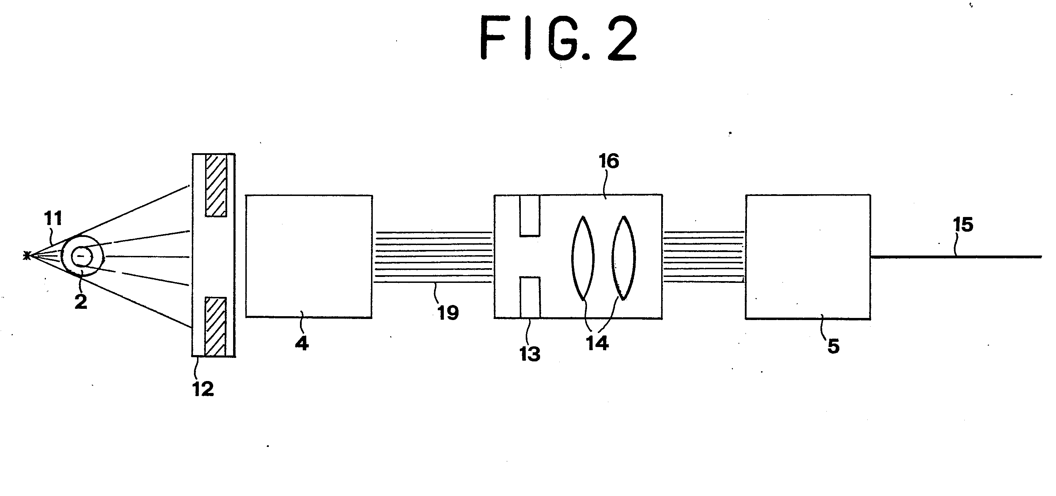

For a better understanding of what happens between the block 1 and the block 5 of figure 1, reference should be made to figure 2.

The rays coming from the microfocus radiographic apparatus 1, schematically shown with the numeral 11, are directed towards an iris 12 which eliminates the uninteresting part of the rays external to the specimen 2. Said iris is realized with lead shields, possibly controllable together with the movement of the positioning device 3, and said iris is necessary in order to avoid an overexposure of the brilliance intensifier 4. The iris 12 selects, for this purpose, the area of interest of the X-ray impinging on the brilliance intensifier 4 for the conversion of the same into luminous energy. (The X-rays that do not impinge on the specimen and that consequently are of no interest, are thus eliminated). In register with the exit of the iris 12, there is located the brilliance intensifier 4 having the purpose of transforming and amplifying the incident X-rays into a luminous radiation in the field of visible light. These rays are generally shown with the numeral 19. In 16 an optical objective lens is indicated which has two purposes: by means of the diaphragm 13, the luminous intensity at the center of the television camera 5 may be adjusted; the lenses 14 perform an enlargement of the incoming image that will be picked up by the television camera itself. Said television camera, converts the luminous intensity incident on the photosensitive surface into an electric signal proportional to the locally received intensity. Finally, at the output of the television camera 5 a normal video signal indicated in the figure as 15 will be obtained.

Consequently at this point a signal containing the useful information of the article to be examined, in electrical form is available.

The analog electric signal may either be sent directly to a monitor 6 for its display as specified in figure 1, or it may be sent, through a suitable analog-to-digital conversion block 7, to the processor 8 to perform the appropriate processing and the automatized analysis according to the invention.

The analog-to-digital conversion is performed in the block 7 in three separate steps. The first step is that one of sampling, and a matrix of real numbers is obtained therefrom representing the value of the intensity (density) of the specimen to which they refer. The second step is that of quantization, which allows the derivation from said sample of the maximum and minimum which identify the variation range of the specimen; at this point the image may be "scaled" in this range by dividing said range in n-decision segments, to which codes are univocally assigned. In the third step the actual encoding of the analog value into the quantized digital value is carried out. Since such quantization introduces noise into the image, and since the actual devices used are not ideal devices (and consequently are intrinsic noise generators), it will be necessary to take into account these facts to develop a reliable method.

It is consequently necessary that the criteria with which the electrical signal is subsequently acquired and handled, as well as the use of the "microfocus" with specified enlargement ratios be coordinated to obtain an image at the output from the element and consequently from the whole chain in its complex, which is acceptable for the intended purposes.

It is consequently necessary that the processing of the digital signal be performed with algorithms necessarily bound to the transfer function of the brilliance intensifier device and of the television camera. The main difficulty resides in the need to tranfer as faithfully as possible to a discrimination level in the order of 50 microns the interpretation of the data provided by the specimen under examination and to arrange the matter so that the subsequent steps do not modify the result, i.e. the analysis, with respect to the situation actually existing in the specimen; this in order to arrive at the end of the analysis with confidence in the correspondence of the result obtained with respect to the analyzed specimen. Obviously this preprocessing step is strictly dependent upon the intrinsic data of the system. In practice the whole process may be considered as divided into three steps:

1) acquisition;
2) preprocessing;
3) analysis.

The acquisition has the obvious function of recording in the memory of the processor the digital image of the specimen under examination. The pre-processing corrects the distortions which are present in the digital image. Finally the analysis, applied to the preprocessed image has the purpose of detecting the presence of defects, evaluating their entity and establishing whether the article under examination is acceptable or not with respect to its specifications.

In particular, in the acquisition step, the necessary movements of the part under examination must be controlled by the processor so that the necessary synchronism exists between the take up of the images and the movements.

It is thus possible to automatize this step, eliminating the long pauses between one image take-up and the other, which undoubtedly contribute to the total time required for the examination.

In the preprocessing step, contrary to what has been done up to now, the adopted algorithms are not "general-purpose" ones, but conveniently adjusted and derived from the transfer functions of the brilliance intensifier, the television camera, and the analog-to-digital converter.

In general, these three blocks, being arranged in cascade, may be considered as a block having a single transfer function, let's say H.

If f(x,y) is the bidimensional function which describes the radiographic image incident on the brilliance intensifier 4, the function at the output of the analog-to-digital converter, g(x,y) which represents the image converted into a digital form and which is stored by the processor, is bound to f(x,y) by the relationship:

$$g(x,y) = Hf(x,y).$$

Once the acquisition has been performed, the image g(x,y) is subjected to a processing step the specific purpose of which is to correct the geometric and radiometric distortions; this processing is indicated with $H^{-1}$, this function being derived from H and being such that $H^{-1}*H = 1$.

Consequently, after the processing the following function will be obtained:

$$H^{-1}g(x,y) = H^{-1}Hf(x,y) = f(x,y)$$

in other words the function representing the original image will be restored. The operation disclosed up to now is of essential importance for correction of the geometrical distortions to perform correct area measurements. Subsequently the correctly processed signal must be read and interpreted. The algorithms must perform this step, must individuate the defects of the specimen, measure them and determine whether or not they are larger or smaller than a given acceptability threshold in function of the involved specifications. Several kinds of algorithms are possible, which are utilized in image processing, and the choice of one of these algorithms is dictated by the article to be analyzed.

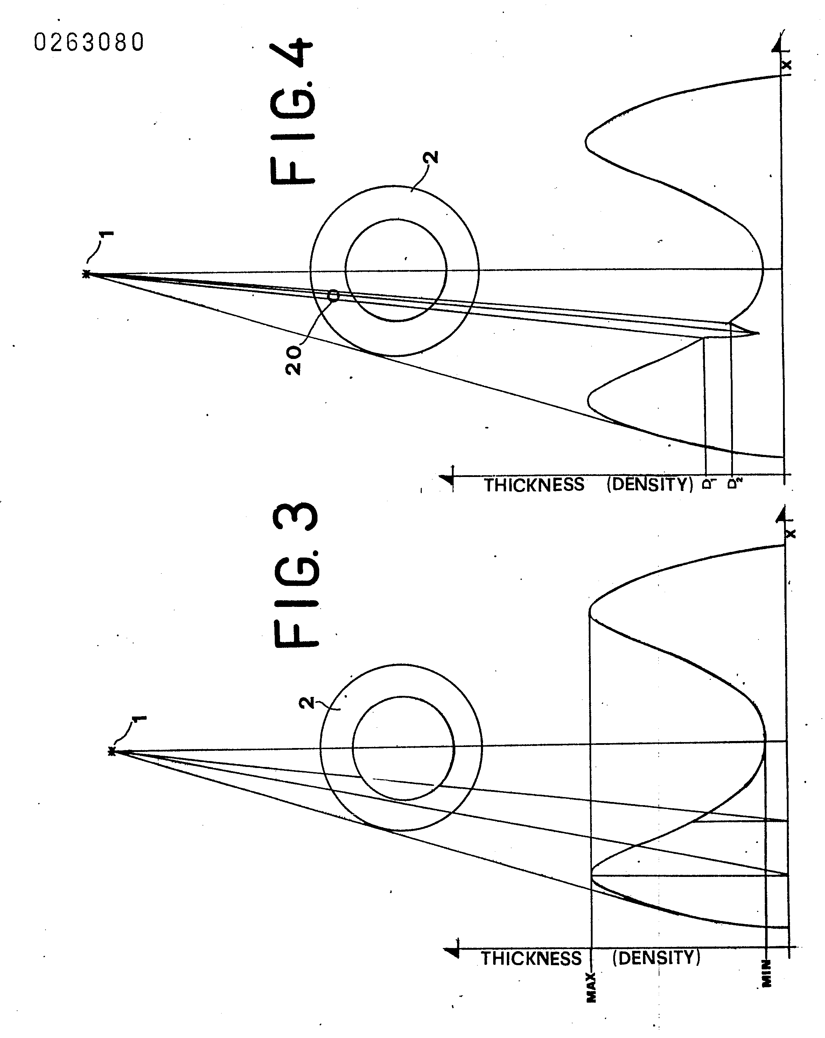

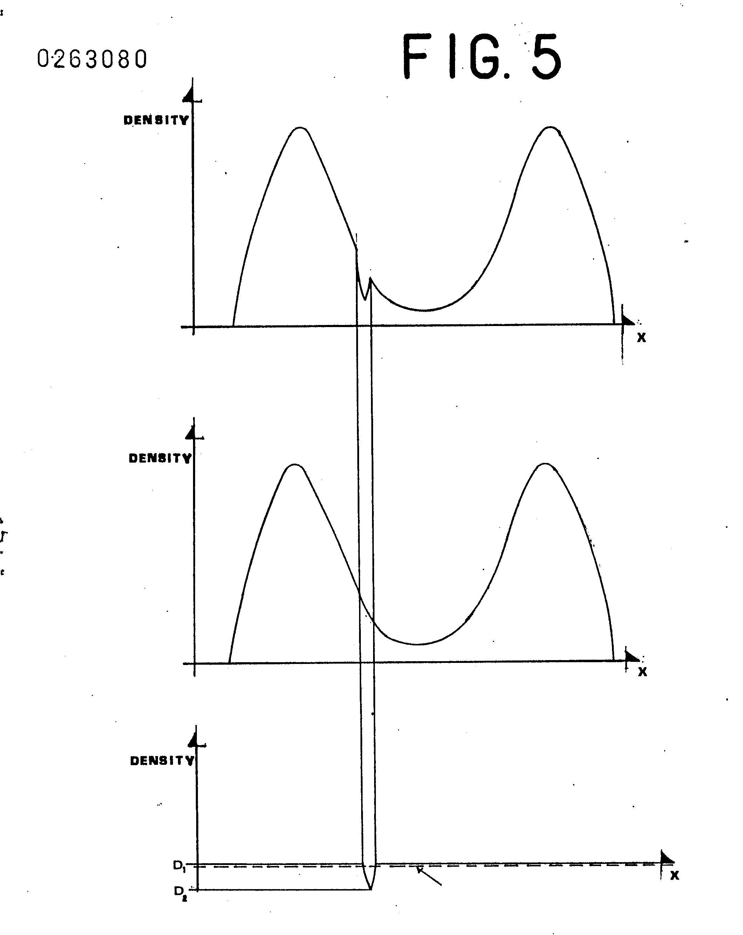

Considering that the preferred embodiment is directed to the radiography of bars, a particular method directed to the analysis of these bars has been developed. This method consists of subtracting from the radiographic image of the bar a second ideal image of a reference bar without defects. The process may be more easily understood by referring to figures 3, 4 and 5. In figure 3, the manner in which the X-ray source 1 illuminates the bar 2 has been schematized. When it is seen from the source, the behaviour of the thickness of the bar is that represented in the diagram included in said figure, in which the thickness spans between a minimum and a maximum with the trend described in said figure. If reference is now made to figure 4, wherein a bar 2 which has in its interior a gaseous inclusion 20 is analyzed, the behaviour of the thickness is that represented by the diagram included in said figure. As it can be seen the defect in thickness may be quantified on the ordinate axis. If one thinks to subtract said two images, as schematically illustrated in figure 5, the third diagram is the resulting one. In said diagram, the defect is actually more easily quantified and it is straightforward to establish a threshold reference level for the acceptability of defects (the dotted line of this diagram), under which the piece is discarded. Having isolated the defects, it is possible to determine both their number and their extension, and it is possible to establish on the basis of well defined parameters the acceptability conditions for a piece much more complex than the single example shown in figures 3 to 5. Moreover the result of the examination may be memorised in the disk 9 associated to the processor 8, constituting an easily accessible file whereon it is also possible to perform statistical analyses for isolating those production steps leading to these detected defects.

Thanks to the complete automatization of the process, it is possible to effect radiographies rapidly and along different planes, even if, owing to the particular shape of the bar, this is not necessary in the present case. On the other hand, this method may be easily applied to any geometrical shape by writing a suitable control and processing program on the processor 8, the detailed description of which goes beyond the purpose of this invention, since any average programmer can write it. Moreover, the whole chain may be renewed following the evolving of the technique, making it possible to have always more sophisticated instruments for performing this kind of analyses. It is clearly necessary in such cases to calculate the tranfer function of the transducers each time, but this step usually does not involve great difficulties.

## Claims

1. An apparatus for real time automatic radiographic analysis comprising:

- a microfocus radiographic device emitting X-rays;

- a brilliance intensifier device placed in front of said radiographic device to convert the X-rays produced by the latter into luminous energy;

- pick-up means placed in front of said brilliance intensifier device on the opposite side with respect to said radiographic device to convert the luminous energy emitted by said brilliance intensifier device into electric signals;

- conversion means, connected to said pick-up means to convert said electric signals into digital signals;

- processor means, connected to said pick-up means, controlling the data acquisition by said conversion means;

- memory means, connected to said processor means, for storing said data;

- display means connected to said processor means for displaying said data;

- positioning means, supporting the object to be radiographed for positioning said object between said brilliance intensifier device and said microfocus radiographic device;

- said processor means controlling, according to data received from said pick-up means through said conversion means, said positioning means to obtain an optimal focusing.

2. An apparatus according to claim 1, wherein said positioning means perform the movement of the article along three cartesian axes and perform moreover the rotation of the article to obtain several images of the same article along different planes.

3. An apparatus according to claim 1, wherein said brilliance intensifier device includes an iris for converting only the interesting part of the X-rays.

4. An apparatus according to claim 1, wherein said pick-up means comprise diaphragm means and objective lens means for better focusing the luminous energy coming from said brilliance intensifier device.

5. An apparatus according to claim 1, further including a printer/plotter connected to said processor means for obtaining a paper copy of said data.

6. A method for performing real-time automatic radiographic analysis, comprising the steps of:

- positioning the article to be subjected to radiographic analysis on a positioner carriage before an X-ray source obtaining an X-ray image of the article; converting said X-ray image into a luminous image; deriving from said luminous image analog signals representative of the latter;

- encoding said analog signals in a digital form;

- performing a pre-processing for eliminating the defect connected to the X-ray-digital conversion; performing the analysis of the digital image according to criteria predetermined according to the object.

7. A method according to claim 6, wherein the encoding step includes also the step of storing said image on memory means.

8. A method according to claim 6, wherein the pre-processing step includes the step of storing the corrected image on memory means.

9. A method according to claim 6, wherein the step of analyzing further includes the step of displaying the image of said display means.

10. A method according to claim 6, wherein the step of positioning includes the step of moving the object according to coordinated axes and of rotating it to obtain images along predetermined planes.

11. A method according to claim 6, wherein the step of positioning includes also the step of moving the article to find the best focusing.

12. A method according to claim 6, wherein the step of performing the analysis includes the step of subtracting the obtained image from a reference image to evidence the defects and to calculate the magnitude of said defect.

13. An apparatus according to claim 1, wherein said processor means control said positioning means to obtain the image with respect to predetermined planes.

14. An apparatus according to claim 1, wherein said processor means perform a pre-processing to eliminate the defects connected to said X-ray-digital conversion.

15. An apparatus according to claim 1, wherein said processor means perform an analysis of the digitized image according to criteria predetermined on the basis of the article.

16. An apparatus according to claim 5, wherein said analysis is performed by subtracting the image obtained from a reference image to evidence the defects and to calculate the magnitude of said defects.

# FIG.1

0263080

# FIG.2

11
2
12
4
19
16
13
14
5
15

# FIG. 3

1

2

THICKNESS (DENSITY)

MAX

MIN

X

# FIG. 4

1

20

2

THICKNESS (DENSITY)

$D_1$

$D_2$

X

FIG. 5

0263080

DENSITY

X

DENSITY

X

DENSITY

$D_1$

$D_2$

X